# FASCICULE DE BREVET EUROPEEN

(11) **EP 2 145 175 B1**
(45) Date de publication et mention de la délivrance du brevet: **25.12.2019**
(21) Numéro de dépôt: 08805767.4
(22) Date de dépôt: 09.05.2008
(51) Int. Cl.: G01N 21/90, G01N 21/93, B07C 5/12, G01N 21/84

(54) **PROCEDE ET MACHINE D'INSPECTION D'ARTICLES TRANSPARENTS OU TRANSLUCIDES**
VERFAHREN UND MASCHINE ZUR ÜBERPRÜFUNG TRANSPARENTER ODER TRANSLUZENTER ARTIKEL
METHOD AND MACHINE FOR INSPECTING TRANSPARENT OR TRANSLUCENT ARTICLES

(30) Priorité: 09.05.2007 FR 0754944
(43) Date de publication de la demande: 20.01.2010
(73) Titulaire: HCV 2, 69390 Vourles (FR)
(72) Inventeur: VENAILLE, Christophe, 69230 St-Genis Laval (FR); BAREL, Laurent, 69420 Condrieu (FR)
(74) Mandataire: Thibault, Jean-Marc
(86) Numéro de dépôt international: PCT/FR2008/050818
(87) Numéro de publication internationale: WO 2008/149010

(56) Documents cités:
- DE-A1- 3 324 449
- DE-C1- 4 302 656
- US-A1- 2005 263 443

## Description

La présente invention concerne le domaine technique du contrôle optique d'objets translucides ou transparents en vue de détecter d'éventuels défauts présentés par ces articles.

L'objet de l'invention trouve une application particulièrement avantageuse pour l'inspection ou le contrôle optique en vue de détecter des défauts susceptibles d'apparaître sur des articles tels que des récipients en verre ou en matière plastique.

Dans l'état de la technique, il est connu d'inspecter de manière automatique et en ligne, à l'aide d'une machine de contrôle, des articles défilant à haute cadence devant une série de postes de contrôle comportant chacun au moins un capteur par exemple de mesure délivrant un signal de sortie pour chaque article passant devant ledit capteur. Un tel défilement à haute cadence signifie qu'un capteur est apte à voir passer au moins un article avant que l'article précédent arrive devant le dernier capteur en considération du sens de défilement des articles. Chaque poste de contrôle vérifie que chaque article respecte au moins un critère de qualité tel que par exemple, des caractéristiques géométriques, l'absence d'un type de défaut ou, comme indiqué dans la demande de brevet WO 02/01207, la présence de corps étrangers à l'intérieur de l'article.

Le poste de contrôle est pourvu de moyens de détection de la présence d'un article permettant de déclencher l'acquisition d'un signal correspondant au passage de chaque article. Chaque capteur de mesure délivre ainsi un signal de sortie qui est traité de manière à obtenir des mesures caractéristiques de chaque article. Chacune de ces mesures caractéristiques est comparée à un critère de qualité ou un réglage pour déterminer si l'article est conforme ou défectueux. Lorsqu'un article est considéré comme défectueux, l'information est envoyée à un poste de tri qui est placé sur la ligne après le dernier poste de contrôle. Bien entendu, l'avancée des articles devant les différents postes de contrôle est suivie de manière que le poste de tri puisse éjecter l'article considéré comme défectueux par au moins l'un des postes de contrôle, lorsque cet article passe devant le poste de tri.

Une telle machine permet de contrôler à haute cadence la fabrication ou la production d'articles transparents ou translucides Pour contrôler le bon fonctionnement de la machine et des capteurs, il est connu par example, par la demande brevet US 2005/0263443 que l'opérateur soit amené, à intervalle de temps régulier, à passer des échantillons témoins ou de référence conformes et défectueux. Ces articles de référence sont intercalés dans le flux des articles inspectés alors que le résultat conforme ou défectueux est bien entendu connu. L'opérateur vérifie ainsi que les articles de référence conformes ne sont pas jetés par la machine et que les articles de référence défectueux sont bien éjectés.

Si cette méthode permet de détecter la dérive de fonctionnement de la machine, ce procédé ne donne pas d'informations supplémentaires à l'opérateur afin d'optimiser le fonctionnement de la machine concernant sa capacité à détecter sans erreur, les articles réellement défectueux.

L'objet de l'invention vise donc à proposer un nouveau procédé permettant d'inspecter à l'aide d'une machine des articles creux transparents ou translucides défilant à haute cadence, ce procédé permettant d'optimiser la qualité de détection afin de réduire voire d'éliminer, le rejet d'articles réellement conformes considérés comme défectueux par la machine et/ou la non détection d'articles réellement défectueux considérés comme conformes par la machine.

Pour atteindre un tel objectif, le procédé de l'invention comprend les étapes définies dans la revendication 1 annexée.

A titre d'exemple, le procédé consiste à choisir les articles de référence parmi des articles d'étalonnage ou témoin amenés à défiler devant les capteurs ou parmi des articles inspectés au cours de la phase d'inspection.

Par exemple, le procédé consiste à traiter les signaux de sortie associés aux articles de référence avec des paramètres de traitement identiques ou différents des paramètres utilisés pour le traitement des signaux de sortie issus des capteurs devant lesquels défilent les articles. Ainsi, le procédé consiste à traiter les signaux de sortie associés aux articles de référence selon un réglage identique ou différent du réglage utilisé pour le traitement des signaux de sortie issus des capteurs devant lesquels défilent les articles.

Pour les articles inspectés au cours de la phase d'inspection, le procédé consiste à choisir les articles de référence parmi des articles inspectés préalablement pendant la phase d'inspection et de contrôle.

Avantageusement, le procédé consiste à réaliser une phase de qualification du réglage de la machine pendant la phase d'inspection des articles.

Selon une caractéristique avantageuse, le procédé consiste à réaliser automatiquement et/ou périodiquement une phase de qualification du réglage de la machine.

Selon une autre caractéristique avantageuse, le procédé consiste au terme de la phase de qualification du réglage de la machine, à disposer d'un indicateur de performance qualité de la machine donnant le nombre d'articles de référence défectueux réellement considérés comme défectueux par la machine, et/ou d'un indicateur de performance productivité de la machine donnant le nombre d'articles de référence conformes réellement considérés comme conformes par la machine.

Un autre objet de l'invention est de proposer une machine, tel que défini dans la revendication 8 annexée, pour inspecter des articles creux transparents ou translucides défilant à haute cadence successivement, devant une série de postes de contrôle comportant chacun au moins un capteur délivrant un signal de sortie pour chaque article passant devant ledit capteur en considérant qu'un capteur est apte à voir passer au moins un article avant que l'article précédent arrive devant le dernier capteur, les capteurs étant reliés à une unité de traitement et de contrôle adaptée pour traiter les signaux de sortie de manière à déterminer un résultat indiquant les articles conformes et les articles défectueux, l'unité de traitement et de contrôle comportant des moyens de mémorisation aptes à enregistrer au moins des signaux de sortie des capteurs et un identifiant d'article pour chaque signal de sortie, associé audit article.

Selon l'invention, les moyens de mémorisation enregistrent des signaux de sortie correspondant à des articles de référence conformes et défectueux, à chacun de ces articles de référence sont associés un identifiant pour l'article de référence concerné et un résultat attendu sur le caractère conforme ou défectueux de l'article de référence, l'unité de traitement et de contrôle comportant :
- des moyens pour réaliser, pendant une phase d'inspection et de contrôle, une phase de qualification du réglage de la machine consistant à déclencher, pour chaque article de référence, le traitement d'au moins deux signaux de sortie de cet article de référence, de manière à obtenir après traitement, un résultat sur le caractère défectueux ou conforme de chaque article de référence,
- des moyens pour comparer le résultat obtenu sur le caractère défectueux ou conforme de chaque article de référence avec le résultat attendu associé à chaque article de référence afin d'en déduire la qualité de réglage de la machine.

Pour permettre l'inspection des articles, l'unité de traitement et de contrôle peut comporter :
- des moyens de mémorisation aptes à enregistrer au moins deux signaux de sortie des capteurs et un identifiant d'article pour chaque signal de sortie, associé audit article,
- des moyens de sélection d'au moins deux signaux de sortie enregistrés correspondant à un même article, et cela pour tous les articles,
- et des moyens de traitement adaptés pour prendre en compte ensemble, pour le traitement, au moins deux des signaux de sortie enregistrés et sélectionnés correspondant à un même article.

Avantageusement, la machine comporte des moyens pour réaliser automatiquement une phase de qualification de réglage de la machine.

Avantageusement, l'unité de traitement et de contrôle comporte en tant que réglage de la machine, d'une part des paramètres des moyens de calcul ou de traitement pour les signaux de sortie et d'autre part, des critères de qualité.

Avantageusement, la machine comporte des moyens de modification du réglage de la machine, c'est-à-dire des paramètres de traitement utilisés pour le traitement des articles.

Avantageusement, l'unité de traitement et de contrôle comporte des moyens adaptés pour traiter en même temps selon des réglages différents, les signaux de sortie enregistrés pour des articles de référence, et des signaux de sortie relatifs à des articles défilant devant les capteurs.

Selon une caractéristique avantageuse de réalisation, l'unité de traitement et de contrôle comporte au moins un indicateur de performance qualité de la machine donnant le nombre d'articles de référence défectueux réellement considérés comme défectueux par la machine, et/ou d'un indicateur de performance productivité de la machine donnant le nombre d'articles de référence conformes réellement considérés comme conformes par la machine.

Selon une autre caractéristique de l'objet de l'invention, la machine comporte au moins un écran d'affichage relié à l'unité de traitement et de contrôle qui fournit à l'écran, au moins deux signaux de sortie enregistrés et/ou données caractéristiques correspondant à un même article afin d'assurer l'affichage simultané des signaux de sortie enregistrés et/ou données caractéristiques correspondant à un même article, et/ou des indicateurs de performance qualité ou productivité.

De préférence, la machine comporte un poste de tri entre les articles défectueux ne respectant pas les critères de qualité et les articles conformes respectant les critères de qualité, ce poste de tri est placé à la suite du dernier capteur en étant relié à l'unité de traitement et de contrôle.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique générale d'une machine de contrôle conforme à l'invention.
La **Figure 2** est une vue schématique montrant une étape d'une phase de qualification du réglage de la machine.
La **Figure 3** est une vue schématique explicitant une autre étape caractéristique d'une phase de qualification du réglage de la machine.
La **Figure 4** est une vue schématique montrant un autre exemple de mise en œuvre d'une phase de qualification du réglage de la machine, en parallèle avec une phase de détection.

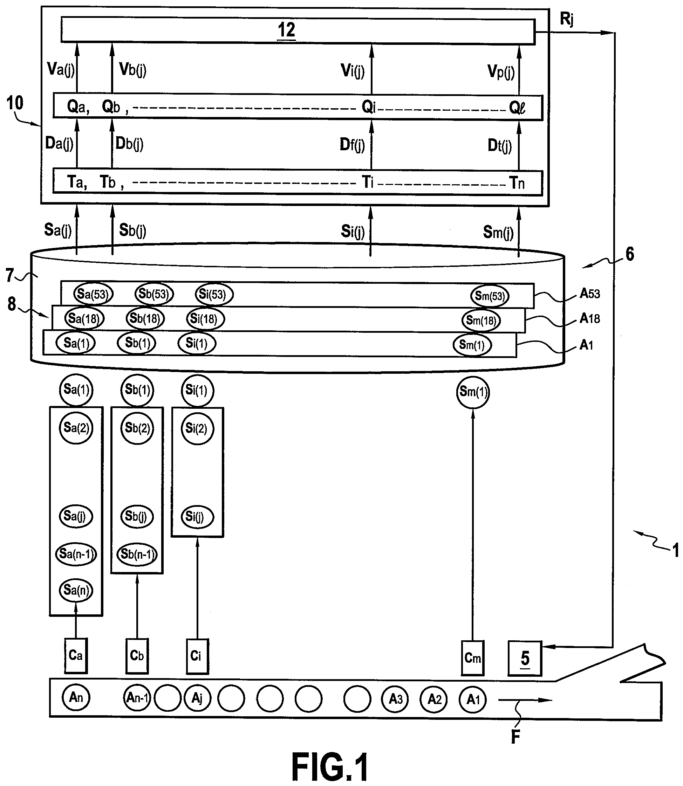

Tel que cela ressort plus précisément de la **Figure 1****,** l'objet de l'invention concerne une machine **1** pour inspecter des articles creux transparents ou translucides **A₁, A₂** ... **Aj** ... **An** (avec **j** variant de **1** à **n**), tels que par exemple des articles en verre ou en matière plastique comme des bouteilles, des pots ou des flacons. La machine **1** comporte une série de postes de contrôle comportant chacun au moins un capteur **Ca, Cb** ..., **Ci,** ... **Cm** (avec **i** variant de **a** à **m**) et devant lesquels défilent à haute cadence les articles **Aj**. La machine de contrôle 1 comporte ainsi un convoyeur **3** permettant d'amener selon le sens de défilement représenté par la flèche **F**, les articles **A₁, A₂** ..., **Aj** ..., **An** à défiler successivement et respectivement devant les capteurs **Ca, Cb ..., Ci ..., Cm.** Ce défilement est tel qu'un capteur est apte à voir passer au moins un article **Aj** avant que l'article précédent **Aj-1** arrive devant le dernier capteur à savoir **Cm** en considération du sens de défilement **F**. Dans l'exemple illustré, le sens de défilement des articles est représenté de manière linéaire mais il est clair que l'objet de l'invention s'applique pour tous types de déplacement amenant les articles à défiler successivement devant des postes de contrôle.

Chaque capteur **Ci** délivre un signal de sortie **Si(j)** (avec **i** variant de **1** à **m**) pour chaque article **Aj** passant devant ledit capteur. De manière classique, la machine **1** comporte des moyens de détection tels que des capteurs de présence comme des cellules photoélectriques permettant de détecter l'arrivée de l'article **Aj** en face du capteur **Ci** et de déclencher l'acquisition du signal **Si(j)** pour l'article **Aj**. Ainsi, lorsque par exemple l'article **A₁** passe devant les capteurs par exemple **Ca** et **Cm**, ces derniers délivrent un signal de sortie respectivement **Sa(1)** et **Sm(1).** De même, lorsque, par exemple, l'article **A₂** passe devant les capteurs, par exemple **Ca, Cb,** ces derniers délivrent un signal de sortie respectivement **Sa(2)** et **Sb(2).** Ainsi, il doit être compris que le passage de chaque article **Aj** devant l'ensemble des **m** capteurs **Ci** conduit à l'obtention de **m** signaux **Si(j)** pour chaque article **Aj**.

Les capteurs **Ci** peuvent être de toute nature adaptée pour assurer une inspection ou un contrôle des articles **Aj** permettant de déterminer si ces articles respectent ou non des critères de qualité, c'est-à-dire si ces articles sont conformes ou défectueux. Par exemple, ces capteurs **Ci** sont des capteurs de mesure, des capteurs d'images, des caméras. Selon une variante avantageuse de réalisation au moins deux des capteurs **Ci** sont des capteurs d'images.

La machine de contrôle **1** comporte de préférence un poste de tri **5** entre les articles défectueux respectant les critères de qualité et les articles conformes respectant lesdits critères. Ce poste de tri **5** est placé derrière le dernier capteur à savoir **Cm**, en considération du sens de défilement **F**. En d'autres termes, chaque article **Aj** passe devant le poste de tri **5** après avoir passé devant le dernier capteur **Cm**. Par exemple, le poste de tri **5** peut comporter un éjecteur retirant de la file des articles inspectés, les articles défectueux.

La machine de contrôle **1** comporte également une unité de traitement et de contrôle **6** à laquelle sont reliés les capteurs **Ci** et le poste de tri **5**. Cette unité de traitement et de contrôle **6** comporte des moyens logiciels et matériels adaptés pour acquérir et traiter les signaux de sortie **Si(j)** et pour piloter le poste de tri **5** en fonction du caractère défectueux ou non des articles inspectés. Il est à noter qu'il doit être compris que l'unité de traitement et de contrôle **6** ne correspond pas obligatoirement à un appareil unique tel un ordinateur composé d'une unité centrale et de mémoires par exemple, mais à divers appareils reliés ensemble via des liaisons de communication de tous types connus.

Selon une caractéristique avantageuse de l'objet de l'invention, l'unité de traitement et de contrôle **6** comportent des moyens de mémorisation **7** aptes à enregistrer au moins l'ensemble des signaux de sortie **Si(j)** des capteurs **Ci**. Il doit être considéré que les signaux de sortie **Si(j)** enregistrés correspondent aux signaux de sortie bruts délivrés par les capteurs **Ci**. En d'autres termes, ces signaux de sortie **Si(j)** sont enregistrés sans avoir été traités.

Ces moyens de mémorisation **7** sont aptes à enregistrer également un identifiant **j** en association avec chaque signal de sortie **Si(j)**. En effet, la machine de contrôle **1** comporte des moyens de suivi de l'avancée des articles **Aj** devant les postes de contrôle et de tri. Par exemple, ces moyens de suivi de l'avancée des articles peuvent être réalisés par des codeurs. Ainsi, chaque signal de sortie **Si(j)** des capteurs **Ci**, pour un article **Aj** est enregistré en association avec un identifiant **j** pour l'article **Aj** concerné. Il peut ainsi être constituée une base de données regroupant l'ensemble des signaux de sortie **Si(j)** de l'ensemble des capteurs **Ci**, ces signaux de sortie **Si(j)** étant affectés d'un identifiant d'articles auxquels ils correspondent. Comme identifiant, il peut être utilisé, par exemple, un numéro d'ordre **j**, un compteur ou toute datation précise.

L'unité de traitement et de contrôle **6** comporte des moyens de sélection **8** d'au moins deux des signaux de sortie enregistrés par exemple **Si(j)** et **Sk(j)** et correspondant à un même article **Aj**. De préférence, l'ensemble des signaux de sortie enregistrés **Si(j)** pour un même article **Aj** sont sélectionnés ou regroupés ensemble. La **Figure 1** schématise, à titre d'exemple, le regroupement des signaux **Sa(1), Sb(1)** ... **Si(1)** ... **Sm(1)** pour l'article **A₁**, des signaux de sorite **Sa(18), Sb(18)** ... **Si(18)** ... **Sm(18)** pour l'article **A₁₈** et des signaux de sortie **Sa(53), Sb(53)** ... **Si(53)** ... **Sm(53)** pour l'article **A₅₃.** De préférence, le regroupement des signaux de sortie Si(j) par article est réalisé pour l'ensemble des **n** articles **Aj**. Bien entendu, le regroupement des signaux de sortie **Si(j)** par article **Aj**, illustré à la **Figure 1** n'est qu'une représentation schématique ne correspondant pas nécessairement à l'emplacement des signaux de sortie dans la base de données.

Il doit être considéré que les signaux de sortie enregistrés **Si(j)** ainsi sélectionnés par article **Aj**, peuvent être pris en compte ensemble lors de l'opération de traitement des signaux de sortie enregistrés, destinée à déterminer le caractère conforme ou non des articles. A cet effet, l'unité de traitement et de contrôle **6** comporte des moyens de traitement **10**, adaptés pour déterminer si chaque article **Aj** est conforme ou défectueux. Ces moyens de traitement **10** comportent des moyens de calcul ou de traitement **Ti** (avec **i** variant de **a** à **n**) pour les signaux de sortie enregistré **Si(j)** de manière à obtenir des données caractéristiques **Df(j)** (avec **f** variant de **a** à **t**). Ces données caractéristiques **Df(j)** sont comparés à des critères de qualité **Qi** (avec **i** variant de **a** à **l**) permettant d'obtenir un ou plusieurs classements ou verdicts **Vi(j)** (avec **i** variant de **a** à **p**) qui sont récupérés à l'aide de moyens de combinaison ou d'analyse **12** afin d'obtenir un résultat **Rj** sur l'article **Aj**. D'une manière générale, les n traitements **Ti**, les **t** données caractéristiques **Df(j)**, les **l** critères de qualité **Qi** et/ou les **p** verdicts **Vp(j)** sont en nombres égaux ou différents entre eux et par rapport aux **m** signaux de sortie **Sm(j).**

Bien entendu, les moyens de calcul ou de traitement **Ti** sont adaptés à la nature des signaux de sortie **Si(j)** et au critère de qualité à contrôler. Par exemple, si un signal de sortie est une image, les moyens de calcul ou de traitement peuvent assurer des analyses de géométrie ou de photométrie, des transformations d'images par anamorphose, etc.

Selon un premier exemple de mise en œuvre, chaque moyen de calcul ou de traitement **Ti** des moyens de traitement **10** est appliqué à un signal de sortie enregistré **Si(j)** permettant d'obtenir une donnée caractéristique. En d'autres termes, selon cet exemple de réalisation, les traitements **Ti** sont effectués, sur les signaux de sortie **Si(j)** relatifs à un même article **A(j)**, de manière indépendante les uns aux autres. Par exemple, une donnée caractéristique **Df(j)** peut être une mesure telle par exemple une caractéristique géométrique de l'article vu dans l'image. Une donnée caractéristique **Df(j)** peut être, par exemple, aussi, la présence d'un défaut tel qu'une inclusion, un pli, un bouillon, la déformation d'un ornement (ou blason) ou d'une étiquette, l'absence d'une indication obligatoire.

Les moyens de calcul ou de traitement **Ti** sont mis en œuvre pour traiter de manière sensiblement synchrone ou simultanément au moins deux signaux de sortie, par exemple **Si(j), Sk(j)** et de préférence l'ensemble des signaux enregistrés correspondant à un même article. Ainsi, par exemple les signaux de sortie **Sa(1), Sb(1)** ... **Si(1)** ... **Sm(1)** correspondant à l'article **A₁** sont pris en compte ensemble pour le traitement, à savoir respectivement par les moyens de calcul ou de traitement respectivement **Ta, Tb ... Ti ... Tn.** Les signaux de sortie **Si(j)** correspondant à un même article **Aj** sont donc traités ensemble ou de manière sensiblement simultanée.

Selon cet exemple, l'ensemble des traitements réalisés sur les signaux de sortie d'un même article permet d'obtenir, de manière sensiblement synchrone ou simultanée, des données caractéristiques **Df(j)** qui sont comparées à des critères de qualité **Qi**. Ainsi l'ensemble des comparaisons pour un même article entre les données caractéristiques **Df(j)** et les critères de qualité **Qi** intervient de manière sensiblement simultanée ou synchrone. Par exemple, les critères de qualité **Qi** correspondent à des seuils fixant la limite entre un article conforme et un article défectueux. Ces seuils peuvent correspondre par exemple à des dimensions de l'article, des répartitions de matériau, la présence de salissures, d'inclusions, de bouillons, à un nombre de bouillons.

La comparaison entre les données caractéristiques **Df(j)** et les critères de qualité **Qi** permet d'obtenir un classement ou un verdict **Vi(j)** correspondant à un article **Aj** défectueux ou conforme. Il est à noter que pour chaque article **Aj**, les verdicts ou classements **Vi(j)** peuvent être obtenus ensemble ou de manière synchrone autorisant un traitement de consolidation **12**, par article, des verdicts ou des classements. La disponibilité des verdicts ou des classements concernant un même article autorise la prise en compte simultanée ou synchrone de l'ensemble des verdicts ou classements **Vi(j)** relatif à l'article permettant d'en déduire un résultat **Rj** sur l'article concerné **Aj**. En d'autres termes, pour un même article, le classement **Vi(j)** obtenu à la suite de l'application d'un critère de qualité **Qi** peut être modifié en tenant compte du classement **Vk(j)** obtenu à la suite de l'application d'un autre critère de qualité **Qk**. Ainsi, la prise en compte ensemble des verdicts ou classement relatifs à un article permet de modifier ou de consolider les verdicts ou classements individuels obtenus pour cet article.

Le résultat **Rj** sur l'article concerné **Aj** est transmis au poste de tri **5** de manière que ce dernier puisse retirer de la file, chaque article **Aj** défectueux lorsqu'il passe devant le poste de tri **5**.

Il ressort de la description qui précède que l'enregistrement des signaux de sortie **Si(j)** des capteurs permet, lors du traitement de ces signaux, de prendre en compte plusieurs ou l'ensemble des signaux de sortie relatifs à un même article **Aj**, indépendamment de l'ordre de sortie des signaux de sortie **Si(j)**. Cette disponibilité permet de consolider les verdicts entre eux.

Selon un autre exemple de réalisation, il apparaît possible de prendre en compte pour chaque article **Aj**, au moins deux et d'une manière générale l'ensemble des signaux de sortie **Si(j)** relatifs à un même article, permettant d'obtenir pour chaque article, après traitement, des données caractéristiques **Dt(j)** résultant de l'analyse combinée de ces signaux de sortie. Selon cette variante de réalisation, les moyens de calcul ou de traitement **Ti** pour chaque signal de sortie **Si(j)** interagissent entre eux ou ne sont pas indépendants les uns des autres.

Par exemple, il peut être envisagé que le traitement d'un signal de sortie d'un article dépend du résultat d'au moins un autre traitement d'un autre signal de sortie relatif audit article. Ainsi, le traitement par exemple **Tb** du signal de sortie **Sb(1)** de l'article **A₁** peut être effectué uniquement après l'exécution du traitement par exemple **Tc** du signal de sortie **Sc(1)** de l'article **A₁.** En d'autres termes, le résultat du traitement **Tc** doit être connu afin d'opérer le traitement **Tb**.

Il est à noter que, compte tenu de l'enregistrement des signaux de sortie, l'ordre de traitement des signaux de sortie relatifs à un même article peut être différent de l'ordre d'acquisition de ces signaux de sortie.

Selon un autre exemple, la prise en compte ensemble d'au moins deux et d'une manière générale, de tous les signaux de sortie **Si(j)** relatifs à un même article permet de mettre en œuvre un traitement de combinaison entre ces signaux de sortie de manière à obtenir des données caractéristiques **Dt(j)**. Les signaux de sortie relatifs à un même article sont ainsi traités de manière combinée permettant de mettre en œuvre par exemple des opérations de comparaison, de soustraction, d'addition, de corrélation, etc.

Il est à noter que ces données caractéristiques **Dt(j)** obtenues après traitement, sont en nombre par article, supérieur, égal ou inférieur au nombre de signaux de sortie **Si(j)** par article. En effet, le traitement combiné des signaux de sortie **Si(j)** permet d'obtenir des informations supplémentaires et/ou de réduire le nombre de données caractéristiques **Dt(j)** par rapport aux signaux de sortie **Si(j)**.

Comme expliqué ci-dessus, les données caractéristiques **Df(j)** sont comparées aux critères de qualité **Qi** de manière à obtenir un nombre **i** de verdicts ou de classements **Vi(j)** correspondant à un article **Aj** défectueux ou conforme. La prise en compte par des moyens **12**, des verdicts **Vi(j)** pour un même article permet d'en déduire un résultat **Rj** sur l'article concerné. Il est à noter que les moyens **12** sont à même de prendre en compte les verdicts **Vi(j)** de manière indépendante (de sorte qu'un verdict n'influence pas un autre verdict) ou de manière dépendante afin de consolider ou modifier le résultat **Rj**.

Conformément à l'invention, l'objet de l'invention vise à mettre en œuvre au moins une phase de qualification du réglage de la machine pendant la phase d'inspection ou de contrôle d'un lot d'articles.

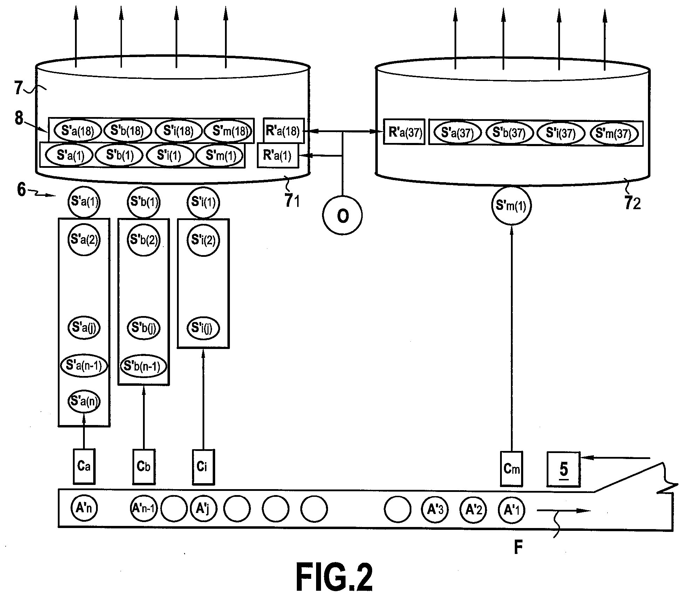

Pour mettre en œuvre une telle phase de qualification du réglage de la machine, il est prévu, comme illustré à la **Figure 2****,** de choisir des articles de référence **A'j** conformes et défectueux dont le passage devant les différents capteurs **Ci** permet d'obtenir des signaux de sortie **S'i(j)** qui sont enregistrés dans les moyens de mémorisation **7**. A chaque signal de sortie enregistré, sont associés un identifiant pour l'article de référence concerné et un classement attendu **R'a(j)** sur le caractère conforme ou défectueux de l'article de référence. En effet, l'opérateur connaît le résultat sur le caractère conforme ou défectueux de chacun de ces articles de référence. L'opérateur **O** fournit à la machine, les résultats attendus **R'a(j)** pour ces articles de référence. Comme cela ressort de la **Figure 2**, il peut par exemple être constitué une base de données **7₁** des signaux de sortie correspondant aux articles conformes et une base de données **7₂** des signaux de sortie relatifs aux articles défectueux.

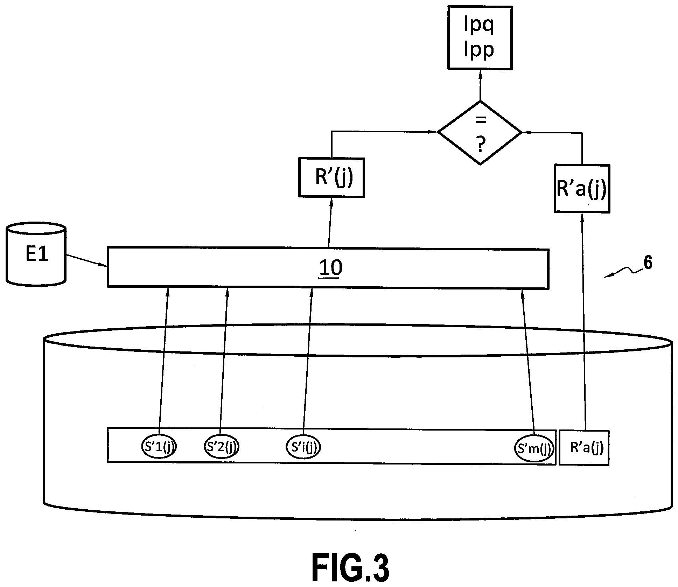

Comme expliqué en relation de la **Figure 1****,** lors du traitement de ces signaux de sortie, par les moyens **10,** au moins deux et d'une manière générale, l'ensemble des signaux de sortie relatifs à un même article de référence sont sélectionnés ensemble. Comme illustré à la **Fig. 3**, ce résultat obtenu **R'j** par ce traitement **10**, sur le caractère défectueux ou conforme de chaque article de référence est comparé avec le classement attendu **R'a(j)** associé à l'article de référence afin d'en déduire la qualité de réglage de la machine, en fonction de la concordance ou non entre le résultat obtenu **R'j** et le résultat attendu **R'a(j).**

La qualité de réglage de la machine peut ainsi être exprimée par un indicateur de performance qualité **Ipq** de la machine et/ou un indicateur de performance productivité **Ipp** de la machine.

L'indicateur de performance qualité **Ipq** est obtenu en établissant le ratio entre d'une part, le nombre d'articles de référence **A'j** défectueux réellement considérés comme défectueux par la machine (c'est-à-dire le nombre de fois où, pour des articles défectueux, le résultat obtenu **R'j** est égal au résultat attendu R'aj) et d'autre part, le nombre d'articles de référence **A'j** défectueux.

De même, l'indicateur de performance productivité **Ipp** de la machine est obtenu en établissant le ratio entre d'une part, le nombre d'articles de référence **A'j** conformes réellement considérés comme conformes par la machine (c'est-à-dire le nombre de fois où, pour des articles conformes, le résultat obtenu **R'j** est égal au résultat attendu **R'a(j)** et d'autre part, le nombre d'articles de référence **A'j** conformes.

Chaque indicateur de performance qualité **Ipq** ou productivité **Ipp** peut être exprimé en pourcentage ou faire l'objet d'une visualisation ou d'un affichage approprié.

Selon un premier exemple de réalisation, les articles de référence sont choisis parmi des articles d'étalonnage ou des articles témoins qui sont placés par l'opérateur pour défiler devant les capteurs, pendant une phase de réglage de la machine. Le passage des articles témoins devant les capteurs permet d'obtenir des signaux de sortie qui sont enregistrés avec le classement conforme ou défectueux. Ces signaux de sortie indexés par articles de référence et auxquels est associé le classement attendu **R'a(j)** peuvent être utilisés par l'opérateur à chaque fois qu'une phase de qualification du réglage de la machine est nécessaire.

Selon un deuxième exemple de réalisation, les articles de référence **A'j** sont choisis parmi les articles **Aj** inspectés préalablement. En d'autres termes, il peut être choisi comme articles de référence, un lot d'articles pris parmi une partie voire la totalité des articles **Aj** préalablement inspectés. De manière plus précise, l'opérateur sélectionne en fait les signaux de sortie enregistrés **Si(j)** pendant le contrôle de la production et indexés par article. Un classement conforme ou défectueux **R'a(j)** est attribué à ces signaux de sortie enregistrés **Si(j)** pouvant être qualifiés d'échantillons virtuels de manière qu'ils constituent des articles de référence.

Il doit être compris que dans les exemples décrits ci-dessus, les signaux de sortie enregistrés et affectés d'un classement peuvent être utilisés autant que le besoin s'en fait sentir, pour la phase de qualification du réglage de la machine. En effet, la machine peut régulièrement ou périodiquement et de manière automatique sans l'intervention de l'opérateur, procéder à cette phase de qualification du réglage de la machine. De plus, la machine peut communiquer via un réseau de supervision, en plus des résultats statistiques de l'inspection en cours, les résultats **Ipq, Ipp** de qualification du réglage de la machine. La machine peut déclencher un signal d'alerte si cette qualification révèle une dérive.

Il est ainsi possible de simuler sur la machine de contrôle par le rejeu des signaux de sortie enregistrés relatifs à ces articles de référence, le passage d'un ensemble d'articles de référence de sorte qu'il est possible de disposer de l'indicateur de performance qualité **Ipq** de la machine et/ou l'un indicateur de performance productivité **Ipp** de la machine.

Ces deux indicateurs permettent de décrire de manière très synthétique la performance de la machine et de comparer au cours du temps sur la base des mêmes informations, les éventuelles évolutions ou dérives du comportement de la machine. Ces deux indicateurs peuvent être communiqués via le réseau de supervision.

Il est à noter que ces indicateurs de performance sont justes car ils reposent sur la prise en compte des articles et non des signaux stockés partiellement et/ou sans identifiant comme le propose l'art antérieur. Ainsi, si deux signaux de sortie délivrés par deux capteurs conduisent à deux verdicts de défauts pour le même article, le procédé ne comptabilise pas deux articles défectueux.

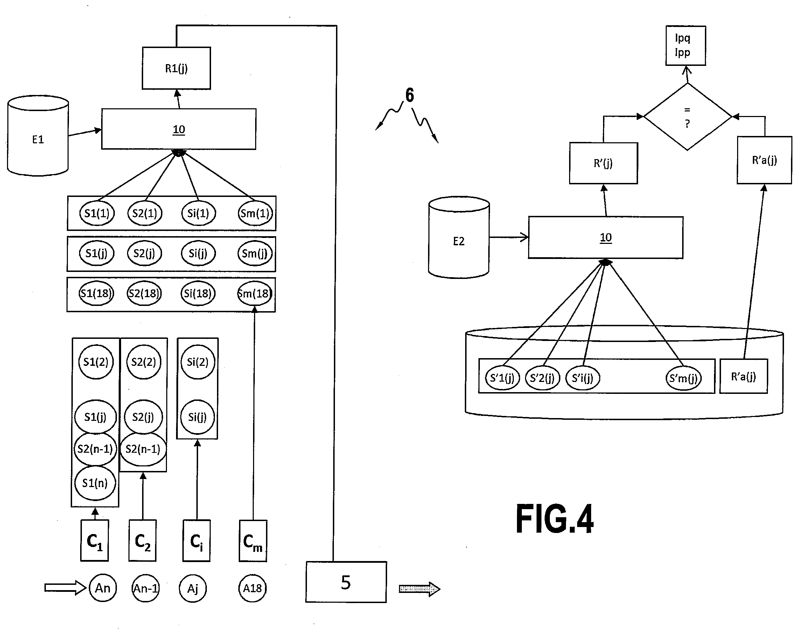

Selon une autre caractéristique avantageuse de l'objet de l'invention, la phase de qualification du réglage de la machine est réalisée pendant ou simultanément à la phase de contrôle des articles **Aj**. A cet effet et tel que cela ressort plus précisément de la **Fig. 4**, l'unité de traitement et de contrôle **6** est dimensionnée de manière à pouvoir simultanément d'une part, contrôler les articles **Aj** défilant devant les capteurs **Ci** et d'autre part, procéder au traitement, par article, des signaux de sortie enregistrés **S'i(j)** des articles de référence, afin de qualifier le réglage de la machine.

Dans la mesure où la machine de contrôle **1** dispose de la capacité de traiter une véritable production d'articles de référence tout en continuant à effectuer son travail d'inspection, l'opérateur en charge du réglage de la machine dispose de moyens pour l'aider à optimiser les performances de la machine. Ainsi, l'opérateur peut en toute sécurité, modifier le réglage de sa machine, estimer la pertinence de ce nouveau réglage sans perturber le contrôle en ligne effectué par la machine. A cet effet, les moyens de traitement **10** utilisent des données ou des paramètres de test qui sont différents des données ou des paramètres utilisés pour le traitement des signaux de sortie issus des capteurs devant lesquels défilent les articles **Aj**.

La **Fig. 4** illustre de manière schématique, le fonctionnement des moyens de traitement **10** selon un réglage **E₁** de la machine. Comme expliqué ci-dessus, un tel réglage **E₁** consiste au choix ou à la détermination des paramètres des moyens de calcul ou de traitement **Ti** et/ou des critères de qualités **Qi**. Par exemple, l'opération de réglage des paramètres des moyens de calcul ou de traitement **Ti** peut consister en une modification de seuil, du gain d'un amplificateur numérique ou dans le cas de traitement d'images, à la modification des zones d'intérêt ou des filtres numériques. Par exemple, l'opération de réglage des critères de qualités **Qi** peut consister à modifier des tolérances de hauteur par exemple ou la surface maximum des défauts. Il est à noter que la mise en oeuvre de la phase d'inspection ou de la phase de qualification du réglage selon un réglage **E₁** permet d'y associer des indicateurs de performance **Ipp, Ipq.**

Parallèlement au traitement par la machine des articles **Aj**, l'opérateur peut en toute sécurité, créer un nouveau réglage **E₂** de la machine, c'est-à-dire un nouveau jeu de paramètres pour les moyens de traitements et de calcul **Ti**. Pour ce nouveau réglage **E₂**, il est obtenu de nouveaux indicateurs de performance **Ipp, Ipq.** L'opérateur peut estimer la performance du réglage **E₂** grâce aux calculs des indicateurs de performance **Ipp, Ipq** sur les articles de référence dont les signaux de sortie ont été enregistrés, tout en laissant la machine continuer parallèlement l'inspection des articles en ligne avec les moyens de traitement et le jeu de paramètres actuels (réglage E₁). Si l'opérateur observe que le nouveau réglage **E₂** est meilleur que le réglage en cours **E₁**, à partir d'une comparaison notamment des indicateurs de performance **Ipp, Ipq** selon les réglages **E₁**, **E₂**, il peut alors instantanément remplacer le réglage en cours par le nouveau réglage afin que par la suite, la production en ligne soit inspectée avec le nouveau réglage.

Si l'opérateur souhaite modifier les paramètres de réglage de la machine, il peut les appliquer à tout ou partie de la production déjà inspectée.

L'opérateur dispose ainsi d'une information statistique sur la qualité de son nouveau réglage **E₂** et est capable de prédire les effets de ce nouveau réglage :
- amélioration ou dégradation de la détection des défauts (taux d'articles défectueux) et dans quelle proportion,
- amélioration ou dégradation du niveau de production de la ligne d'inspection (taux d'articles conformes) et dans quelle proportion.

Selon une autre caractéristique avantageuse de l'objet de l'invention, l'unité de traitement et de contrôle **6** est reliée à un écran d'affichage adapté pour assurer l'affichage simultané des signaux de sortie enregistrés **Si(j)** correspondant à un même article et/ou des données caractéristiques **Dt(j)** correspondant à un même article. De préférence, l'opérateur pilote l'unité de traitement et de contrôle **6** de sorte que cette dernière délivre à l'écran les signaux sélectionnés. L'écran affiche ainsi simultanément les signaux relatifs à un même article permettant ainsi de caractériser au mieux un article prédéterminé. Bien entendu, l'écran est apte à afficher les signaux relatifs à n'importe quel article **Aj**. Cet affichage simultané des signaux pour tout article inspecté, à la demande de l'opérateur, est particulièrement avantageux dans le cas de capteurs d'images, car l'écran affiche l'ensemble des vues d'un article obtenues sous des angles différents par divers capteurs d'images (ou caméras). De plus, l'écran est adapté pour assurer l'affichage des indicateurs de performance qualité **Ipq** et de productivité **Ipp** de la machine, sous toutes formes possibles, telles que graphique ou numérique.

Dans le même sens, l'unité de traitement et de contrôle **6** est à même de fournir à distance, via un réseau de communication, les signaux de sortie enregistrés **Si(j)** et/ou données caractéristiques **Dt(j)** correspondant à un même article et/ou les indicateurs de performance qualité **Ipq** ou productivité **Ipp**.

L'invention n'est pas limitée aux exemples décrits et représentés car diverses modifications peuvent y être apportées sans sortir de son cadre, défini par les revendications annexées.

## Revendications

1. Procédé pour inspecter, pandent une phase d'inscription et de contrôle, à l'aide d'une machine (**1**), des articles creux transparents ou translucides (**Aj**) défilant à haute cadence successivement, devant une série de postes de contrôle comportant chacun au moins un capteur (**Ci**) délivrant un signal de sortie (**Si**(**j**)) pour chaque article (**Aj**) passant devant un capteur en considérant qu'un capteur est apte à voir passer au moins un article (**Aj**) avant que l'article précédent (**Aj-1**) arrive devant le dernier capteur, les signaux de sortie (**Si**(**j**)) étant traités de manière à déterminer un résultat (**Rj**) indiquant, les articles conformes et les articles défectueux, le procédé comportant une phase de qualification du réglage de la machine consistant à choisir des articles de référence, (**A'j**) **caractérisé en ce qu'**il consiste :
a) pendant cette phase d'inspection et de contrôle :
- à enregistrer dans des moyens de mémorisation (**7**), des signaux de sortie (**Si(**j**)**) délivrés par les capteurs (**Ci**) pour des articles (**Aj**) à chacun desquels est associé un identifiant (**j**),
b) pour mettre en oeuvre une phase de qualification du réglage de la machine :
- à choisir parmi les signaux de sortie (**Si**(**j**)) enregistrés dans les moyens de mémorisation (**7**), des signaux de sortie (**S'i(j)**) correspondant à des articles de référence (**A'j**) conformes et défectueux,
- pour chaque article de référence (**A'j**) à associer aux signaux de sortie (**S'i(j)**), un classement attendu (**R'a(j)**) sur le caractère conforme ou défectueux de l'article de référence (**A'j**) et l'enregistrer,
c) et lors de ladite phase de qualification du réglage de la machine :
- à sélectionner ensemble au moins deux signaux de sortie enregistrés [**S'a(j)**], [**S'k(j)**] correspondant à un même article de référence
- à traiter lesdits Signaux de sortie enregistrés [S'a(j)], [S'k(j)], de manière à obtenir après traitement, un résultat (**R'j**) sur le caractère défectueux ou conforme des articles de référence (**A'j**),
- et à comparer le résultat obtenu par traitement (**R'j**), sur le caractère défectueux ou conforme de chaque article de référence avec le résultat attendu (**R**'**a**(**j)**) associé à chaque article de référence afin de déduire la qualité de réglage de la machine.

2. Procédé selon la revendication 1, **caractérisé en ce qu'**il consiste à choisir les articles (**A'j**) de référence parmi des articles d'étalonnage ou témoin, amenés à défiler devant les capteurs ou parmi des articles (**Aj**) inspectés au cours de la phase d'inspection.

3. Procédé selon la revendication 1 ou 2, **caractérisé en ce qu'**il consiste à choisir les articles de référence (A'j) parmi des articles inspectés préalablement pendant la phase d'inspection et de contrôle.

4. Procédé selon la revendication 1, **caractérisé en ce qu'**il consiste à traiter les signaux de sortie (**S'i**(**j**)) associés aux articles de référence selon un réglage identique ou différent du réglage utilisé pour le traitement des signaux de sortie (**Si**(**j**)) issus des capteurs devant lesquels défilent les articles. (Aj)

5. Procédé selon la revendication 1, **caractérisé en ce qu'**il consiste à réaliser une phase de qualification du réglage de la machine pendant la phase d'inspection des articles (**Aj**).

6. Procédé selon la revendication 1 ou 5, **caractérisé en ce qu'**il consiste à réaliser automatiquement et/ou périodiquement une phase de qualification du réglage de la machine.

7. Procédé selon la revendication 1, 4 ou 5, **caractérisé en ce qu'**il consiste au terme de la phase de qualification du réglage de la machine, à disposer d'un indicateur de performance qualité (**Ipq**) de la machine donnant le nombre d'articles de référence défectueux réellement considérés comme défectueux par la machine, et/ou d'un indicateur de performance productivité (**Ipp**) de la machine donnant le nombre d'articles de référence conformes réellement considérés comme conformes par la machine.

8. Machine pour mettre en œuvre le procédé selon la revendication 1, pour inspecter des articles creux transparents ou translucides (**Aj**) défilant à haute cadence successivement, devant une série de postes de contrôle comportant chacun au moins un capteur délivrant un signal de sortie (**Si**(**j**)) pour chaque article (**Aj**) passant devant ledit capteur en considérant qu'un capteur est apte à voir passer au moins un article (**Aj**) avant que l'article précédent (**Aj-1**) arrive devant le dernier capteur, les capteurs étant reliés à une unité de traitement et de contrôle (**6**) adaptée pour traiter les signaux de sortie de manière à déterminer un résultat (**Rj**) indiquant les articles conformes et les articles défectueux, **caractérisé en ce que** l'unité de traitement et de contrôle (**6**) comporte :
- des moyens de mémorisation (**7**) aptes à enregistrer au moins des signaux de sortie (**Si**(**j**)) des capteurs (**Ci**) et un identifiant d'article (**j**) pour chaque signal de sortie (**Si**(**j**)), associé audit article, des signaux de sortie (**S'i(j)**) correspondant à des articles de référence (**A'i(j)**) conformes et défectueux, à chacun de ces articles de référence sont associés un identifiant (**j**) pour l'article de référence concerné et un résultat attendu (**R'a(j)**) sur le caractère conforme ou défectueux de l'article de référence
- des moyens pour réaliser une phase de qualification du réglage de la machine, pendant une phase d'inspection et de contrôle, consistant à déclencher, pour chaque article de référence (**A'j**), le traitement d'au moins deux signaux de sortie [**S'i**(**j**),**S'k**(**j**)] de cet article de référence, de manière à obtenir après traitement, un résultat (**R'j**) sur le caractère défectueux ou conforme de chaque article de référence (**A'j**),
- des moyens pour comparer le résultat (**R'j**) obtenu sur le caractère défectueux ou conforme de chaque article de référence avec le résultat attendu (**R'a(j)**) associé à chaque article de référence afin d'en déduire la qualité de réglage de la machine.

9. Machine selon la revendication 8, **caractérisée en ce que** l'unité de traitement et de contrôle (**6**) comporte :
- des moyens de mémorisation (**7**) aptes à enregistrer au moins deux signaux de sortie **[Si**(**j**)**,Sk**(**j**)**]** des capteurs (**Ci**) et un identifiant d'article pour chaque signal de sortie (**Si**(**j**)), associé audit article,
- des moyens de sélection d'au moins deux signaux de sortie **[Si**(**j**)**,Sk**(**j**)**]** enregistrés correspondant à un même article, et cela pour tous les articles,
- et des moyens de traitement adaptés pour prendre en compte ensemble, pour le traitement, au moins deux des signaux de sortie [**Si**(**j**),**Sk**(**j**)] enregistrés et sélectionnés correspondant à un même article.

10. Machine selon la revendication 8 ou 9, **caractérisée en ce que** l'unité de traitement et de contrôle (**6**) comporte en tant que réglage de la machine, d'une part les paramètres des moyens de calcul ou de traitement (**Ti**) pour les signaux de sortie et d'autre part, des critères de qualité (**Qi**).

11. Machine selon la revendication 10, **caractérisée en ce qu'**elle comporte des moyens de modification du réglage de la machine,

12. Machine selon la revendication 11, **caractérisée en ce que** l'unité de traitement et de contrôle (**6**) comporte des moyens adaptés pour traiter en même temps, selon des réglages différents respectivement (**E₂**, **E₁**) les signaux de sortie enregistrés pour des articles de référence (**A'j**), et des signaux de sortie relatifs à des articles (**Aj**) défilant devant les capteurs.

13. Machine selon l'une des revendications 8 à 12, **caractérisée** en ce l'unité de traitement et de contrôle (**6**) comporte des moyens pour déterminer au moins un indicateur de performance qualité (**Ipq**) de la machine donnant le nombre d'articles de référence défectueux réellement considérés comme défectueux par la machine, et/ou d'un indicateur de performance productivité (**Ipp**) de la machine donnant le nombre d'articles de référence conformes réellement considérés comme conformes par la machine.

14. Machine selon l'une des revendications 8 à 13, **caractérisée en ce qu'**elle comporte au moins un écran d'affichage relié à l'unité de traitement et de contrôle (**6**) qui fournit à l'écran, au moins deux signaux de sortie enregistrés **[Si**(**j**)**,Sk**(**j**)**]** et/ou données caractéristiques **Dt**(**j**)) correspondant à un même article afin d'assurer l'affichage simultané des signaux de sortie enregistrés et/ou données caractéristiques correspondant à un même article, et/ou des indicateur de performance qualité (**Ipq**) ou productivité (**Ipp**).

15. Machine selon la revendication 8, **caractérisée en ce qu'**elle comporte des moyens pour réaliser automatiquement et/ou périodiquement la phase de qualification du réglage de la machine.

16. Machine selon la revendication 8, **caractérisée en ce qu'**elle comporte un poste de tri (**5**) entre les articles défectueux ne respectant pas les critères de qualité et les articles conformes respectant les critères de qualité, ce poste de tri (**5**) est placé à la suite du dernier capteur en étant relié à l'unité de traitement et de contrôle (**6**).

17. Machine selon l'une des revendications 8 à 14, **caractérisée en ce que** l'unité de traitement et de contrôle (**6**) fournit à distance, via un réseau de communication, les signaux de sortie [**Si**(**j**)] et/ou les données caractéristiques [**Dt**(**j**)] correspondant à un même article et/ou les indicateurs de performance qualité (**Ipq**) ou productivité (**Ipp**).

## Patentansprüche

1. Verfahren zum Prüfen von transparenten oder transluzenten hohlen Artikeln (Aj) während einer Prüf- und Kontrollphase mithilfe einer Maschine (1), die mit hoher Geschwindigkeit nacheinander an einer Reihe von Kontrollstellen vorbeiziehen, die jede mindestens einen Sensor (Ci) umfassen, der ein Ausgangssignal (Si(j)) für jeden Artikel (Aj) liefert, der an einem Sensor vorbeizieht, wobei berücksichtigt wird, dass ein Sensor geeignet ist, mindestens einen Artikel (Aj) vorbeiziehen zu sehen, bevor der vorhergehende Artikel (Aj-1) vor dem letzten Sensor ankommt, wobei die Ausgangssignale (Si(j)) bearbeitet werden, um ein Ergebnis (Rj) zu bestimmen, das die konformen Artikel und die fehlerhaften Artikel anzeigt, wobei das Verfahren eine Qualifikationsphase der Regulierung der Maschine umfasst, die daraus besteht, Referenzartikel (A'j) auszuwählen, **dadurch gekennzeichnet, dass** es darin besteht:
a) während dieser Prüf- und Kontrollphase:
- von den Sensoren (Ci) gelieferte Ausgangssignalen (Si(j)) für Artikel (Aj) in Speichermitteln (7) zu speichern, wobei jeder davon mit einer Kennung (j) verknüpft ist,
b) um eine Qualifikationsphase der Regulierung der Maschine umzusetzen:
- aus den in den Speichermitteln (7) gespeicherten Ausgangssignalen (Si(j)) Ausgangssignale (S'i(j)) auszuwählen, die konformen und fehlerhaften Referenzartikeln (A'j) entsprechen,
- für jeden Referenzartikel (A'j) eine erwartete Klassifizierung (R'a(j)) über den konformen oder fehlerhaften Charakter des Referenzartikels (A'j) mit den Ausgangssignalen (S'i(j)) zu verknüpfen und sie zu speichern,
c) und während der Qualifikationsphase der Regulierung der Maschine:
- mindestens zwei gespeicherte Ausgangssignale [S'a(j)], [S'k(j)], die einem selben Referenzartikel entsprechen, gemeinsam auszuwählen,
- die gespeicherten Ausgangssignale [S'a(j)], [S'k(j)], derart zu bearbeiten, dass nach Bearbeitung ein Ergebnis (R'j) über den fehlerhaften oder konformen Charakter der Referenzartikel (A'j) erhalten wird,
- und das durch Bearbeitung erhaltene Ergebnis (R'j) über den fehlerhaften oder konformen Charakter jedes Referenzartikels mit dem erwarteten Ergebnis (R'a(j)), das mit jedem Referenzartikel verknüpft ist, zu vergleichen, um auf die Qualität der Regulierung der Maschine zu schließen.

2. Verfahren nach Anspruch 1, **dadurch gekennzeichnet, dass** es daraus besteht, die Referenzartikel (A'j) aus Kalibrierungs- oder Kontrollartikeln, die dazu gebracht werden, an den Sensoren vorbeizuziehen, oder aus den im Verlauf der Prüfphase geprüften Artikeln (Aj) auszuwählen.

3. Verfahren nach Anspruch 1 oder 2, **dadurch gekennzeichnet, dass** es daraus besteht, die Referenzartikel (A'j) aus den zuvor während der Prüf- und Kontrollphase geprüften Artikeln auszuwählen.

4. Verfahren nach Anspruch 1, **dadurch gekennzeichnet, dass** es daraus besteht, die Ausgangssignale (Si(j)), die mit den Referenzartikeln verknüpft sind, gemäß einer Regulierung zu bearbeiten, die mit der Regulierung identisch oder verschieden ist, die für die Bearbeitung der Ausgangssignale (Si(j)) verwendet wird, die von den Sensoren ausgegeben werden, an denen die Artikel (Aj) vorbeiziehen.

5. Verfahren nach Anspruch 1, **dadurch gekennzeichnet, dass** es daraus besteht, eine Qualifikationsphase der Regulierung der Maschine während der Prüfphase der Artikel (Aj) umzusetzen.

6. Verfahren nach Anspruch 1 oder 5, **dadurch gekennzeichnet, dass** es daraus besteht, automatisch und/oder periodisch eine Qualifikationsphase der Regulierung der Maschine umzusetzen.

7. Verfahren nach Anspruch 1, 4 oder 5, **dadurch gekennzeichnet, dass** es am Ende der Qualifikationsphase der Regulierung der Maschine daraus besteht, über einen Indikator (Ipq) der Qualitätsleistung der Maschine, der die Anzahl von fehlerhaften Referenzartikeln angibt, die von der Maschine wirklich als fehlerhaft angesehen werden, und/oder über einen Indikator (Ipp) der Produktivitätsleistung der Maschine zu verfügen, der die Anzahl von konformen Referenzartikeln angibt, die von der Maschine wirklich als konform angesehen werden.

8. Maschine zum Umsetzen des Verfahrens nach Anspruch 1 zum Prüfen von transparenten oder transluzenten hohlen Artikeln (Aj), die mit hoher Geschwindigkeit nacheinander an einer Reihe von Kontrollstellen vorbeiziehen, die jeweils mindestens einen Sensor umfassen, der ein Ausgangssignal (Si(j)) für jeden Artikel (Aj) liefert, der an dem Sensor vorbeizieht, wobei berücksichtigt wird, dass ein Sensor geeignet ist, mindestens einen Artikel (Aj) vorbeiziehen zu sehen, bevor der vorhergehende Artikel (Aj-1) vor dem letzten Sensor ankommt, wobei die Sensoren mit einer Bearbeitungs-und Steuereinheit (6) verbunden sind, die angepasst ist, um die Ausgangssignale so zu bearbeiten, dass ein Ergebnis (Rj) bestimmt wird, das die konformen Artikel und die fehlerhaften Artikel anzeigt, **dadurch gekennzeichnet, dass** die Bearbeitungs- und Steuereinheit (6) umfasst:
- Speichermittel (7), die dazu geeignet sind, zumindest Ausgangssignale (Si(j)) der Sensoren (Ci) und eine Artikelkennung (j) für jedes Ausgangssignal (Si(j)), mit dem Artikel verknüpft, Ausgangssignale (S'i(j)), die konformen und fehlerhaften Referenzartikeln (A'i(j)) entsprechen, zu speichern, wobei jeder dieser Referenzartikel mit einer Kennung (j) für den betreffenden Referenzartikel und einem erwarteten Ergebnis (R'a(j)) über den konformen oder fehlerhaften Charakter des Referenzartikels verknüpft ist,
- Mittel zur Umsetzung einer Qualifikationsphase der Regulierung der Maschine während einer Prüf- und Kontrollphase, die daraus besteht, für jeden Referenzartikel (A'j) die Bearbeitung von mindestens zwei Ausgangssignalen [S'a(j), S'k(j)] dieses Referenzartikels auszulösen, um nach der Bearbeitung ein Ergebnis (R'j) über den fehlerhaften oder konformen Charakter von jedem Referenzartikel (A'j) zu erhalten,
- Mittel zum Vergleichen des erhaltenen Ergebnisses (R'j) über den fehlerhaften oder konformen Charakter jedes Referenzartikels mit dem erwarteten Ergebnis (R'a(j)), das mit jedem Referenzartikel verknüpft ist, um daraus auf die Qualität der Regulierung der Maschine zu schließen.

9. Maschine nach Anspruch 8, **dadurch gekennzeichnet, dass** die Bearbeitungs-und Steuereinheit (6) umfasst:
- Speichermittel (7), die dazu geeignet sind, mindestens zwei Ausgangssignale [Si(j), Sk(j)] der Sensoren (Ci) und eine Artikelkennung für jedes Ausgangssignal (Si(j)) zu speichern, die mit dem Artikel verknüpft ist,
- Mittel zur Auswahl von mindestens zwei gespeicherten Ausgangssignalen [Si(j), Sk(j)], die demselben Artikel entsprechen, und das für alle Artikel,
- und Bearbeitungsmittel, die angepasst sind, um gemeinsam die Bearbeitung von mindestens zwei der gespeicherten und ausgewählten Ausgangssignale [Si(j), Sk(j)] zu berücksichtigen, die demselben Artikel entsprechen.

10. Maschine nach Anspruch 8 oder 9, **dadurch gekennzeichnet, dass** die Bearbeitungs- und Steuereinheit (6) als Regulierung der Maschine einerseits die Parameter von Berechnungs- oder Bearbeitungsmitteln (Ti) für die Ausgangssignale und andererseits Qualitätskriterien (Qi) umfasst.

11. Maschine nach Anspruch 10, **dadurch gekennzeichnet, dass** sie Mittel zur Modifizierung der Regulierung der Maschine umfasst.

12. Maschine nach Anspruch 11, **dadurch gekennzeichnet, dass** die Bearbeitungs-und Steuereinheit (6) Mittel umfasst, die angepasst sind, um gleichzeitig, gemäß entsprechenden unterschiedlichen Regulierungen (E₂, E₁) die gespeicherten Ausgangssignale für Referenzsignale (A'j) und Ausgangssignale in Bezug auf Artikel (Aj) zu bearbeiten, die an den Sensoren vorbeiziehen.

13. Maschine nach einem der Ansprüche 8 bis 12, **dadurch gekennzeichnet, dass** die Bearbeitungs- und Steuereinheit (6) Mittel umfasst, um mindestens einen Indikator (Ipq) der Qualitätsleistung der Maschine, der die Anzahl von fehlerhaften Referenzartikeln angibt, die von der Maschine wirklich als fehlerhaft angesehen werden, und/oder einen Indikator (Ipp) der Produktivitätsleistung der Maschine zu bestimmen, der die Anzahl von konformen Referenzartikeln angibt, die von der Maschine wirklich als konform angesehen werden.

14. Maschine nach einem der Ansprüche 8 bis 13, **dadurch gekennzeichnet, dass** sie mindestens einen Anzeigebildschirm umfasst, der mit der Bearbeitungs- und Steuereinheit (6) verbunden ist, die dem Bildschirm mindestens zwei gespeicherte Ausgangssignale [Si(j), Sk(j)] und/oder charakteristische Daten Dt(j) liefert, die einem selben Artikel entsprechen, um die gleichzeitige Anzeige von gespeicherten Ausgangssignalen und/oder charakteristischen Daten, die einem selben Artikel entsprechen, und/oder Indikatoren der Qualitäts-(lpq)- oder Produktivitätsleistung (Ipp) zu gewährleisten.

15. Maschine nach Anspruch 8, **dadurch gekennzeichnet, dass** sie Mittel zur automatischen und/oder periodischen Umsetzung der Qualifikationsphase der Regulierung der Maschine umfasst.

16. Maschine nach Anspruch 8, **dadurch gekennzeichnet, dass** sie eine Sortierstation (5) zwischen den fehlerhaften Artikeln, welche die Qualitätskriterien nicht einhalten, und den konformen Artikeln umfasst, welche die Qualitätskriterien einhalten, wobei diese Sortierstation (5) auf den letzten Sensor folgend platziert ist und mit der Bearbeitungs- und Steuereinheit (6) verbunden ist.

17. Maschine nach einem der Ansprüche 8 bis 14, **dadurch gekennzeichnet, dass** die Bearbeitungs- und Steuereinheit (6) aus der Ferne über ein Kommunikationsnetz die Ausgangssignale [Si(j)] und/oder die charakteristischen Daten Dt(j), die demselben Artikel entsprechen, und/oder die Indikatoren der Qualitäts-(lpq)- oder Produktivitätsleistung (Ipp) liefert.

## Claims

1. A method for inspecting, during an inspection and monitoring phase, with the aid of a machine (1), transparent or translucent hollow articles (Aj) streaming at high speed in succession, past a series of monitoring stations each comprising at least one sensor (Ci) delivering an output signal (Si(j)) for each article (Aj) traveling past a sensor by considering that a sensor is able to see at least one article (Aj) travel past before the previous article (Aj-1) goes past the last sensor, the output signals (Si(j)) being processed so as to determine a result (Rj) indicating the compliant articles and the defective articles, the method comprising a phase of assessing the setting of the machine consisting in selecting reference articles (A'j), **characterized in that** it consists:
a) during this inspection and monitoring phase:
- in recording, in storage means (7), output signals (Si(j)) of the sensors (Ci), while associating with each of them an identifier (j) for the articles (Aj) concerned
b) in implementing a phase of assessing the setting of the machine:
- in selecting from among the output signals (Si(j)) recorded in the storage means (7), output signals (S'i(j)) corresponding to compliant and defective reference articles (A'j),
- for each reference article (A'j) associated with the output signals (S'i(j)), an expected result (R'a(j)) regarding the compliant or defective character of the reference article (A'j) and recording it,
c) and during said phase of assessing the setting of the machine:
- in selecting together at least two recorded output signals [S'a(j)], [S'k(j)] corresponding to one and the same reference article,
- in processing said recorded output signals [S'a(j)], [S'k(j)], so as to obtain after processing, a result (R'j) regarding the defective or compliant character of the reference articles (A'j),
- and in comparing the result obtained by processing (R'j), regarding the defective or compliant character of each reference article with the expected result (R'a(j)) associated with each reference article so as to deduce the quality of setting of the machine.

2. The method as claimed in claim 1, **characterized in that** it consists in choosing the reference articles (A'j) from among gauge or control articles, made to stream past the sensors or from among articles (Aj) inspected in the course of the inspection phase.

3. The method as claimed in claim 1 or 2, **characterized in that** it consists in selecting the reference articles (A'j) from among the articles previously inspected during the inspection and monitoring phase.

4. The method as claimed in claim 1, **characterized in that** it consists in processing the output signals (S'i(j)) associated with the reference articles according to an identical or different setting from the setting used for the processing of the output signals (Si(j)) arising from the sensors past which the articles (Aj) stream.

5. The method as claimed in claim 1, **characterized in that** it consists in carrying out a phase of assessing the setting of the machine during the phase of inspecting the articles (Aj).

6. The method as claimed in claim 1 or 5, **characterized in that** it consists in automatically and/or periodically carrying out a phase of assessing the setting of the machine.

7. The method as claimed in claim 1, 4 or 5, **characterized in that** it consists on termination of the phase of assessing the setting of the machine, in having available a quality performance indicator (Ipq) for the machine giving the number of defective reference articles actually considered to be defective by the machine, and/or a productivity performance indicator (Ipp) for the machine giving the number of compliant reference articles actually considered to be compliant by the machine.

8. A machine for implementing the method according to claim 1, for inspecting transparent or translucent hollow articles (Aj) streaming at high speed in succession, past a series of monitoring stations each comprising at least one sensor delivering an output signal (Si(j)) for each article (Aj) traveling past said sensor by considering that a sensor is able to see at least one article (Aj) travel past before the previous article (Aj-1) goes past the last sensor, the sensors being linked to a processing and monitoring unit (6) adapted for processing the output signals so as to determine a result (Rj) indicating the compliant articles and the defective articles, **characterized in that** the processing and monitoring unit (6) comprises:
- storage means (7) able to record at least output signals (Si(j)) of the sensors (Ci) and an article identifier (j) for each output signal (Si(j)), associated with said article, output signals (S'i(j)) corresponding to compliant and defective reference articles (A'i(j)), with each of these reference articles are associated an identifier (j) for the reference article concerned and an expected result (R'a(j)) regarding the compliant or defective character of the reference article,
- means for carrying out a phase of assessing the setting of the machine, during an inspection and monitoring phase, consisting in triggering, for each reference article (A'j), the processing of at least two output signals [S'i(j),S'k(j)] for this reference article, so as to obtain after processing, a result (R'j) regarding the defective or compliant character of each reference article (A'j),
- means for comparing the result (R'j) obtained regarding the defective or compliant character of each reference article with the expected result (R'a(j)) associated with each reference article so as to deduce therefrom the quality of setting of the machine.

9. The machine as claimed in claim 8, **characterized in that** the processing and monitoring unit (6) comprises:
- storage means (7) able to record at least two output signals [Si(j),Sk(j)] of the sensors (Ci) and an article identifier for each output signal (Si(j)), associated with said article,
- means for selecting at least two recorded output signals [Si(j),Sk(j)] corresponding to one and the same article, doing so for all the articles,
- and processing means adapted for taking into account together, for the processing, at least two of the recorded and selected output signals [Si(j),Sk(j)] corresponding to one and the same article.

10. The machine as claimed in claim 8 or 9, **characterized in that** the processing and monitoring unit (6) comprises in the guise of setting of the machine, on the one hand, the parameters of the calculation or processing means (Ti) for the output signals and, on the other hand, quality criteria (Qi).

11. The machine as claimed in claim 10, **characterized in that** it comprises means for modifying the setting of the machine.

12. The machine as claimed in claim 11, **characterized in that** the processing and monitoring unit (6) comprises means adapted for processing at the same time, according to different settings respectively (E₂, E₁), the output signals recorded for reference articles (A'j), and output signals relating to articles (Aj) streaming past the sensors.

13. The machine as claimed in one of claims 8 to 12, **characterized in that** the processing and monitoring unit (6) comprises means for determining at least one quality performance indicator (Ipq) for the machine giving the number of defective reference articles actually considered to be defective by the machine, and/or a productivity performance indicator (Ipp) for the machine giving the number of compliant reference articles actually considered to be compliant by the machine.

14. The machine as claimed in one of claims 8 to 13, **characterized in that** it comprises at least one display screen linked to the processing and monitoring unit (6) which provides the screen with at least two recorded output signals [Si(j), Sk(j)] and/or with characteristic data Dt(j) corresponding to one and the same article so as to ensure the simultaneous display of the recorded output signals and/or characteristic data corresponding to one and the same article, and/or of the quality performance (Ipq) or productivity performance indicators (Ipp).

15. The machine as claimed in claim 8, **characterized in that** it comprises means for automatically and/or periodically carrying out the phase of assessing the setting of the machine.

16. The machine as claimed in claim 8, **characterized in that** it comprises a station (5) for sorting between the defective articles not adhering to the quality criteria and the compliant articles adhering to the quality criteria, this sorting station (5) is placed following the last sensor while being linked to the processing and monitoring unit (6).

17. The machine as claimed in one of claims 8 to 14, **characterized in that** the processing and monitoring unit (6) provides remotely, via a communication network, the output signals [Si(j)] and/or the characteristic data [Dt(j)] corresponding to one and the same article and/or the quality performance (Ipq) or productivity performance (Ipp) indicators.
